# EUROPÄISCHE PATENTSCHRIFT

(11) **EP 1 065 237 B1**
(45) Veröffentlichungstag und Bekanntmachung des Hinweises auf die Patenterteilung: **29.10.2003**
(21) Anmeldenummer: 00113048.3
(22) Anmeldetag: 23.06.2000
(51) Int. Cl.: C08K 5/29

(54) **Katalysator-System für die NCO/OH-Reaktion (Polyurethanbildung)**
Catalyst-system for the NCO-OH reaction (polyurethane formation)
Système catalytique pour la réaction NCO-OH (formation de polyuréthane)

(30) Priorität: 02.07.1999 DE 19930556
(43) Veröffentlichungstag der Anmeldung: 03.01.2001
(73) Patentinhaber: Rhein Chemie Rheinau GmbH, 68219 Mannheim (DE)
(72) Erfinder: Heiliger, Ludger, Dr., 67433 Neustadt (DE); Montag, Reinhard, 68775 Ketsch (DE)
(74) Vertreter: Feldhues, Michael L.F., Dr.

(56) Entgegenhaltungen:
- US-A- 4 113 676
- US-A- 4 849 470
- US-A- 5 654 479

## Beschreibung

Die vorliegende Erfindung betrifft ein verbessertes Katalysator-System für die Polyurethanbildung mit dessen Hilfe es gelingt, das "Fogging"-Problem bei der Herstellung von Polyurethan-Werkstoffen zu reduzieren, ohne daß insbesondere die Alterungseigenschaften der so hergestellten Polyurethan-Werkstoffe beeinträchtigt werden.

Es ist bekannt, daß die Geschwindigkeit der Polyurethanbildung (NCO/OH-Reaktion) außer von der Temperatur der Rohstoffe und ihrer Struktur vor allem durch geeignete Katalysatoren beeinflußt wird. Als Katalysatoren für die zuvor beschriebene Reaktion haben sich insbesondere tertiäre Amine, Salze schwacher Säuren (als basische Katalysatoren) und organische Metallverbindungen, wie Zinn-Organo-Verbindungen (als elektrophile Katalysatoren), als besonders geeignet erwiesen.

Es ist üblich, daß bei der PUR-Werkstoff-Herstellung die eingesetzten Katalysatoren im fertigen Werkstoff verbleiben, sofern es sich um unflüchtige oder um einbaubare Katalysatoren handelt.

Werden flüchtige Katalysatoren eingesetzt, so beginnen sich diese bereits während der Werkstoff-Herstellung durch den sich einstellenden Temperaturanstieg der exothermen NCO/OH-Reaktion gemäß ihres niedrigen Siedepunktes zu verflüchtigen.

Dies führt zum einen zu arbeitshygienischen Problemen während der Herstellung der PUR-Werkstoffe, zum anderen zu einer fortlaufenden langsamen Abgabe von der noch im Werkstoff verbliebenen flüchtigen Katalysatoranteilen an die Umgebung ("Fogging").

Setzt man jedoch - wie zuvor beschrieben - nichtflüchtige Katalysatoren ein, d.h. hochsiedende Katalysatoren, oder einbaubare Katalysatoren, so zeigen die mit diesen Katalysatoren hergestellten PUR-Werkstoffe aufgrund des Vorhandenseins dieser Katalysatoren schlechte Alterungseigenschaften, da die Katalysatoren prinzipiell sowohl die Hinreaktion, d.h. die Synthese, wie auch die Rückreaktion, d.h. die Zersetzung bzw. die Umlagerung der PUR-Werkstoffe, beschleunigen. Als Maß für die Zersetzung bzw. Beeinträchigung der Alterungseigenschaften können physikalische Testmethoden, wie der Ford-Test (nach DIN 53 578) herangezogen werden.

Es ist also üblich, mit PUR-Werkstoffen umzugehen, die entweder bei der Herstellung große arbeitshygienische Probleme aufwerfen oder nach deren Herstellung "Fogging"-Probleme verursachen oder die bei Einsatz von nicht-flüchtigen Katalysatoren schlechte Alterungseigenschaften, insbesondere in der Langzeitanwendung aufweisen.

Es bestand daher die Aufgabe, PUR-Katalysator-Systeme zur Verfügung zu stellen, die keine arbeitshygienische Probleme sowie keine "Fogging"-Probleme beinhalten und zum anderen dem fertigen PUR-Werkstoff gute Alterungseigenschaften verleihen.

Gegenstand der vorliegenden Erfindung ist daher ein Katalysator-System bestehend aus
A) Katalysatoren für die NCO/OH-Reaktion (Polyurethanbildung)
   und
B) sterisch gehinderten Carbodiimiden,
wobei die Komponente B) zu 1 bis 200 Gew.-%, bezogen auf die Gesamtmenge an Komponente A), vorhanden ist.

Besonders bevorzugt sind erfindungsgemäß Katalysator-Systeme, bei denen die sterisch gehinderten Carbodiimide (B) in Mengen von 20 bis 180 Gew.-%, insbesondere 50 bis 150 Gew.-%, bezogen auf die Gesamtmenge an Komponente A), im Katalysator-System vorhanden sind.

Als Katalysatoren für die NCO/OH-Reaktion kommen sowohl alle bekannten basischen als auch elektrophile Katalysatoren infrage, die die Polyurethanbildung begünstigen. Solche Katalysatoren sind beispielsweise beschrieben in Kunststoff-Handbuch, Band 7, Polyurethane, 3. neubearbeitete Auflage, Carl HanserVerlag, München-Wien, 1993, S. 104 - 110.

Insbesondere eignen sich Katalysatoren wie sie auf Seite 105 der genannten Veröffentlichung beschrieben sind.

Die sind insbesondere (cyclo-)aliphatische tert.-Amine der Formeln (I) 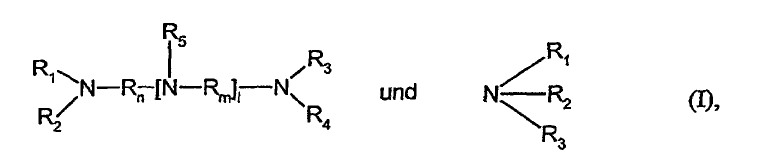 worin
- R₁ bis R₅: gleich oder verschieden sind und für C₁-C₁₈-Alkyl, C₅-C₇-Cycloalkyl, C₆-C₁₀-Aryl sowie C₆-C₁₀-Arylmethyl stehen oder wobei die Reste R₁ und R₂ und/oder R₃ und R₄ miteinander über C₂-C₅-Alkylenreste mit 0 bis 2 Heteroatomen, wie Stickstoff, Schwefel oder Sauerstoff, in der Kohlenstoffkette, verbunden sein können,
- n: für ganze Zahlen von 2 bis 6 steht,
- m: für die Zahlen 2 und 3 steht und
- l: für ganze Zahlen von 0 bis 4 steht.

Weiterhin sind zu nennen (cyclo)-aliphatische Aminoether der Formel (II) 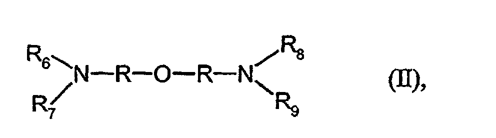 worin
- R₆ bis R₉: die Bedeutung der Reste R₁ bis R₅ besitzen und
- R: für C₁-C₆-Alkylenreste steht.

Weiterhin sind zu nennen (cyclo)-aliphatische Amidine der Formel (III) 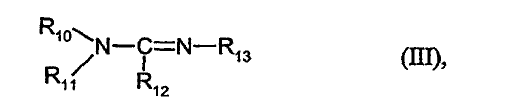 wobei
- R₁₀ bis R₁₃: die Bedeutung der Reste R₁ bis R₅ besitzen oder R₁₀ und R₁₃ und/oder R₁₁ und R₁₂ miteinander über C₂-C₅-Alkylenreste verbunden sein können.

Weiterhin sind zu nennen bicyclische Diamine der Formel (IV) 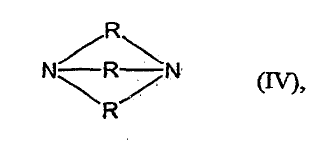 worin
- R: die Bedeutung von R in der Formel (II) besitzt.

Weiterhin sind zu nennen die Organo-Zinn-Verbindungen der Formel (V) 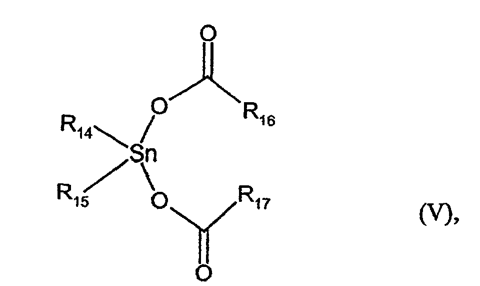 worin
- R₁₄ und R₁₅: die Bedeutung der Reste R₁ bis R₅ besitzen, mit der Maßgabe, daß die Reste R₁₄ und R₁₅ entfallen, wenn das Zinn zweiwertig ist.

Weiterhin sind zu nennen Metallcarboxylate der Formel (VI)

R₁₈-COOM (VI),

worin
- R₁₈: für einen C₁-C₁₈-aliphatischen oder C₅-C₆-cycloaliphatischen Alkylrest oder für einen C₆-C₁₀-Arylrest steht und M für ein Alkalimetall, insbesondere Natrium oder Kalium, steht.

Weiterhin sind zu nennen Amine mit Hydroxygruppen der Formeln (VII) 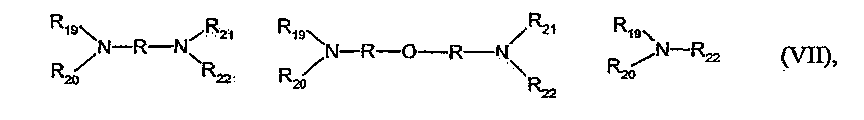 worin
- R₁₉ bis R₂₁: die Bedeutung der Reste R₁ bis R₅ besitzen und
- R₂₂: für Hydroxyethyl steht.

Als Verbindungen der Formeln (I) bis (VII) kommen insbesondere in Betracht:
N,N,N,'-N",N"-Pentamethyldiethylentriamin (I)
N,N-Dimethylbenzylamin (I),
N,N-Dimethylcyclohexylamin (I),
N-Methylmorpholin (I),
Bis(2-dimethylaminoethyl)ether (II),
Bis(2-morpholinoethyl)ether (II),
1,5-Diazobicyclo[4.3.0.]non-5-en (III),
1,8-Diazabicyclo[5.4.0]undec-7-en (III),
2,3-Dimethyl-3,4,5,6-tetrahydro-1,3-diazin (III),
1,4-Diazabicyclo[2.2.2]octan (IV),
Zinn(II)dioctanoat (V),
Zinn(II)dipalmitat (V),
Di-n-butyl-Zinn (IV) dilaurat (V),
Kaliumacetat (VI),
Kalium-2-ethylhexanoat (VI),
N,N-Dimethylaminoethoxyethanol (VII),
(N,N-Dimethylaminoethyl)-(N'-hydroxyethyl-N'methylaminoethyl)ether (VII).

Ganz besonders bevorzugt sind zu nennen:
1,5-Diazabicyclo[4.3.0]non-5-en (III),
1,4-Diazabicyclo[2.2.2]octan (IV),
Di-n-butyl-Zinn (IV) dilaurat (V),
Zinn(II)dioctanoat (V),
Kaliumoctanoat (VI),
N,N-dimethylaminoethanol(VII).

Als sterisch gehinderte Carbodiimide werden erfindungsgemäß solche der Formel (VIII) eingesetzt

R₂₃-N=C=N-R₂₄ (VIII),

worin
- R₂₃ und R₂₄: gleich oder verschieden sind und für 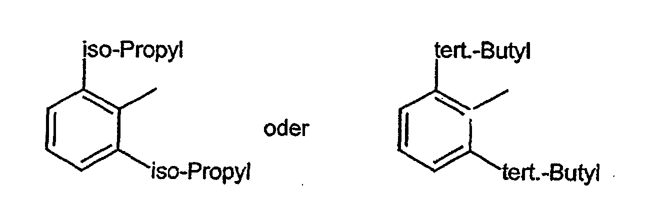 stehen.

Weiterhin kommen als sterisch gehinderte Carbodiimide solche der Formel (IX) in Frage

X-(-R₂₅-N=C=N-R₂₅-)ₙ-X (IX),

worin
- X =: -NCO, -NH-CO-Z-R₂₆, 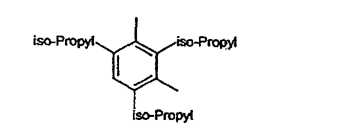
- R₂₅ =: 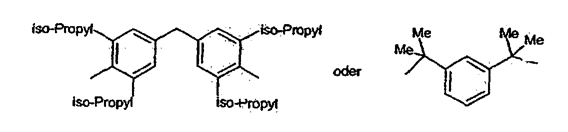
- R₂₆ =: C₁-C₁₈-Alkyl, -Aryl, -Arylalkyl, -Alkylenoxyalkyl, -Alkoxypolyoxyalkylen
- Z=: O, NH, S,
- n=: 2 bis 100.

Insbesondere sind bevorzugt sterisch gehinderte Carbodiimide der nachfolgenden Formeln 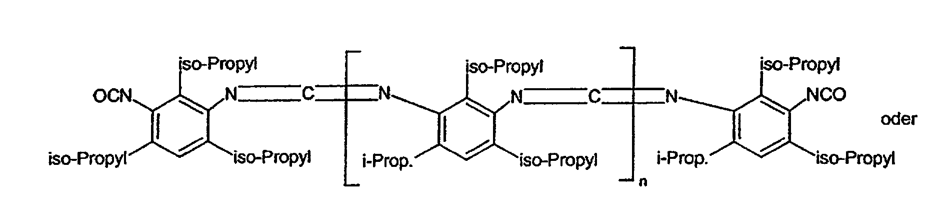 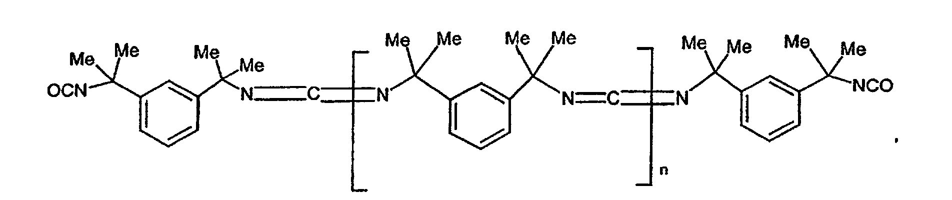 worin
- n=: 2 bis 100.

Ganz besonders bevorzugt ist zu nennen: 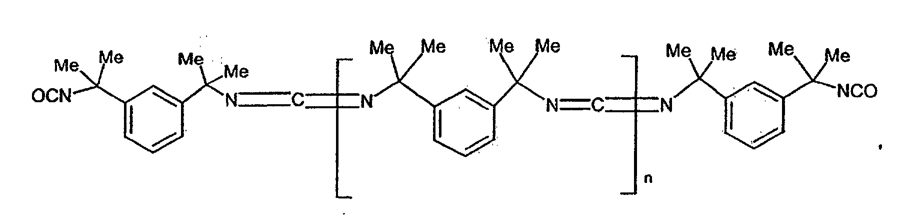 worin
- n=: 2 bis 100.

Sowohl die zuvorgenannten PUR-Katalysatoren als auch die sterisch gehinderten Carbodiimide können einzeln oder im Gemisch untereinander eingesetzt werden, wobei das günstigste Mischungsverhältnis durch entsprechende Vorversuche leicht bestimmt werden kann.

Die erfindungsgemäß eingesetzten sterisch gehinderten Carbodiimide sind bekannt und beispielsweise beschrieben in EP 062 854, DE 1 494 009, DE 2 020 330, DE 1 285 747, DE 2 248 751 EP 0 460 481 und US 5,246,993.

Das erfindungsgemäße Katalysator-System wird zweckmäßigerweise vor der Dosierung in die flüssigen PUR-System-Komponenten in gelöster Form eingesetzt, sofern das erfindungsgemäße Katalysator-System nicht bereits in flüssiger Form vorliegt.

Als geeignete Lösungsmittel kommen insbesondere solche in Frage, die als Komponenten bei der Polyurethan-Herstellung verwendet werden, dies können sein Wasser, Polyole, Isocyanate, Polyisocyanate, Treibmittel, Weichmacher sowie Schaumstoffstabilisatoren (Siliconemulgatoren).

Die geeignete Menge an Lösungsmitteln kann leicht durch entsprechende Vorversuche ermittelt werden.

Das erfindungsgemäße Katalysator-System eignet sich für die Herstellung der verschiedensten PUR-Werkstoffe, insbesondere für die Herstellung von PUR-Weichund Integral-Schaumstoffen.

Daher ist ein weiterer Gegenstand der vorliegenden Erfindung die Verwendung der erfindungsgemäßen Katalysator-Systeme zur Herstellung von PUR-Werkstoffen, insbesondere PUR-Weich- und Integral-Schäumen.

### Beispiele

### Beispiel 1

### (Herstellung eines sterisch gehinderten Carbodiimds der Struktur IX mit R₂₅ = 1,3-Bis(1-methyl-ethyl) und X = -NH-CO-O-R₂₆ mit R₂₆ = Alkoxypolyoxyalkylen)

750 Gew.-Teile (3,1 Mol) 1,3-Bis(1-methyl-2-isocyanatoethyl)benzol mit einem NCO-Gehalt von 34,4 Gew.-% wurden in Gegenwart von 1,5 Gew.-Teilen 1-Methyl-2-phospholen-1-oxid auf 180°C erhitzt und bei dieser Temperatur unter Kohlendioxidentwicklung kondensiert. Zum Erreichen eines NCO-Gehaltes von 9,3 Gew.-% war eine Reaktionszeit von 23 Std. erforderlich. Danach wurden unter Rühren 957Gew.-Teile eines Methoxypolyoxy-ethylenalkohols mit einem durchschnittlichen Molekulargewicht (Zahlenmittelwert) von 520 g/mol hinzugefügt.

Bei Einhaltung der Reaktionstemperatur von 180°C wurden die endständigen NCO-Gruppen der Polymerketten in einem Zeitraum von 30 Minuten in Urethangruppen überführt.

Danach wurde das als Katalysator zugesetzte 1-Methyl-2-phospholen-1-oxid und Reste von nicht umgesetztem 1,3-Bis(1-methyl-2-isocyanatoethyl)benzol bei einer Temperatur von 190°C und unter einem Druck von 0,5 mbar abdestilliert.

Man erhielt 1576 Gew.-Teile einer NCO-Gruppen freien Mischung aus endständige, methoxypolyoxyethylen-Urethangruppen aufweisenden Mono- und oligomeren Polycarbodiimiden, die einen Gehalt von N=C=N-Gruppen von 50 mg/g, eine Viskosität, gemessen bei 25°C nach Ubbelohde von 1950 mPa·s und eine Jodfarbzahl, gemessen nach Verdünnung mit Monochlorbenzol im Volumenverhältnis von 1:5, von 2,4 besaß.
Die Mischung war in Wasser sehr gut löslich.

Die Struktur der Urethangruppen aufweisenden Mischung aus mono- und oligomeren Polycarbodiimiden wurde durch ¹H-NMR und IR-Spektrum nachgewiesen.

### Struktur des Carbodiimids nach Beispiel 1:

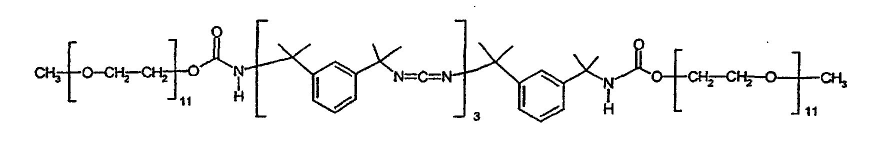

| **Beispiele 2 - 4** (Rezepturen) | | | | |
|---|---|---|---|---|
| **Beispiel** | | **II** | **III** | **IV** |
| ^{*1} Desmophen 2220 B® | Gew.-Teile | 100 | 100 | 100 |
| Desmophen 2200 B Desmodur T80 | | | | |
| Wasser (gesamt) | Gew.-Teile | 4,50 | 4,50 | 4,50 |
| Wasser (eingewogen) | Gew.-Teile | - | 3,50 | 3,50 |
| | | | | |
| ^{*2} Stabilisator SE 232 | Gew.-Teile | 1,00 | 1,00 | 1,00 |
| | | | | |
| ^{*3}Desmorapid DB | Gew.-Teile | 0,50 | 0,50 | 0,50 |
| ^{*3}RC-PUR Aktivator 101 | Gew.-Teile | 0,50 | 0,50 | 0,50 |
| ^{*3}RC-PUR Aktivator 105 | Gew.-Teile | 0,50 | 0,50 | 0,50 |
| | | | | |
| ^{*4}Stabaxol P 200/H₂O 1/1 | Gew.-Teile | - | 1,00 | 1,00 |
| | | | | |
| Desmodur T 80® | Gew.-Teile | 54,00 | 54,00 | 54,00 |
| Kennzahl | | 100 | 100 | 100 |
| Temperatur | | | | |
| Desmophen/Desmodur | (°C) | 22/23 | 22/23 | 22/23 |
| Mischkammer Druck | (bar) | 1,40 | 1,40 | 1,20 |
| Bandgeschwindigkeit | (m min⁻¹) | 2,40 | 2,20 | 2,20 |
| Fördermenge Desmophen | (kg min⁻¹) | 22 | 22 | 22 |
| Startzeit | (s) | 14 | 12 | 13 |
| Steigzeit | (s) | 63 | 62 | 62 |
| Abbindezeit | (s) | 33 | 45 | 45 |

| | | | | |
|---|---|---|---|---|
| *¹ Desmophen 2200 B Desmodur T80 => Handelsprodukt der Bayer AG | | | | |
| *² Stabilisator SE 232 ist ein Handelsprodukt der Witco Corporation | | | | |
| *³ Desmorapid DB, RC-PUR Aktivator 101/RC-PU Aktivator 105 sind Handelsprodukte der Rhein Chemie Rheinau GmbH | | | | |
| *⁴ Substanz aus Beispiel 1 mit Wasser 1:1 verdünnt Desmodur T80® = 80 % 2,4-Toluylendiisocyanat = 20 % 2,6-Toluylendiisocyanat Stabaxol P200® = hochpolymeres Carbodiimid Fp. 80-100°C RC PUR Aktivator® 105 = 33 % Triethylendiamin = 66 % Propylenglykol RC PUR Aktivator® 101 = N-Methylmorpholin Desmorapid DB = N,N-Dimethylbenzylamin Desmophen 2220 B = Polyesterpolyol für Weichblockschaumstoffe überwiegend für techn. Artikel | | | | |

### Beispiele 2 bis 4

### Alterungsprüfung der Rezepturen nach DIN 53 578

120 h, 90°C, 90-95 % Lf (Fordtest)

| **Bezeichnung** | | **II** | **III** | **IV** |
|---|---|---|---|---|
| Druckversuch 40 % Stauchung | kPa | 5,35 5,29 | 5,33 5,23 | 5,26 5,08 |
| Druckversuch nach Lagerung | kPa | 3,02 | 3,41 | 3,32 |
| **Änderung des Druckversuches** | **%** | **-44** | **-36** | **-37** |
| Druckverformungsrest 50 % Stauchung Nullwert nach Lagerung | % | 4,0 **22,4** | 4,5 **9,8** | 4,7 **9,7** |
| Zugfestigkeit Nullwert nach Lagerung | kPa kPa | 183 | 184 | 178 |

Wie aus den Ergebnisen ersichtlich, sind die Schäume mit sterisch gehinderten Carbodiimiden und Aminen (III + IV) deutlich besser im Druckverformungsrest als derjenige ohne das sterisch gehinderte Carbodiimid (II).

## Patentansprüche

1. Katalysator-System für die NCO/OH-Reaktion bestehend aus
A) Katalysatoren für die NCO/OH-Reaktion (Polyurethanbildung)
und
B) sterisch gehinderten Carbodiimiden,
wobei die Komponente B) zu 1 bis 200 Gew.-%, bezogen auf die Gesamtmenge an Komponente A), vorhanden ist.

2. Verwendung des Katalysator-Systems nach Anspruch 1 zur Herstellung von PUR-Werkstoffen, insbesondere PUR-Weich- und Integral-Schäumen.

## Claims

1. Catalyst system for the NCO/OH reaction, consisting of
A) catalysts for the NCO/OH reaction (polyurethane formation)
and
B) sterically hindered carbodiimides,
wherein component B) is present in a quantity of 1 wt.% up to 200 wt.%, based on the total quantity of component A).

2. Use of the catalyst system according to claim 1 for the production of PU materials, in particular flexible PU foams and integral PU foams.

## Revendications

1. Composition catalytique pour la réaction NCO/OH, consistant en
A) des catalyseurs de la réaction NCO/OH (formation du polyuréthanne)
et
B) des carbodiimides objets d'un empêchement stérique,
le composant B) étant présent en quantité de 1 à 200 % du poids total du composant A).

2. Utilisation de la composition catalytique selon la revendication 1 pour la fabrication de matériaux de polyuréthanne, en particulier de mousses souples et de mousses intégrales de polyuréthanne.
